# EUROPEAN PATENT APPLICATION

(11) **EP 4 617 757 A1**
(43) Date of publication of application: **17.09.2025**
(21) Application number: 23930010.6
(22) Date of filing: 28.11.2023
(51) Int. Cl.: G02B 7/04, G02B 7/09

(54) **SLIDING FOCUSING DRIVING DEVICE, LENS MODULE, AND ELECTRONIC DEVICE**

(30) Priority: 24.03.2023 CN 202310351331
(71) Applicant: Huawei Technologies Co., Ltd., Shenzhen, Guangdong 518129 (CN)
(72) Inventor: WU, Yushun, Shenzhen, Guangdong 518129 (CN); JIANG, Hong, Shenzhen, Guangdong 518129 (CN)
(74) Representative: Goddar, Heinz J.
(86) International application number: PCT/CN2023/134788
(87) International publication number: WO 2024/198443

(57) **Abstract**

A sliding focus drive apparatus (1), a lens module (2), and an electronic device are provided. The sliding focus drive apparatus (1) includes a bracket (12), a drive assembly (13), and a mounting base (11) that is configured to mount a lens (20). The drive assembly (13) includes a drive coil (131) and a drive magnet (132), both the drive coil (131) and the drive magnet (132) are located on a first side surface (111) of the mounting base (11), and the first side surface (111) is parallel to an optical axis (M) that is of the lens and that is presented when the lens (20) is mounted on the mounting base (11). Guiding parts (121 and 122) are disposed on the bracket (12), the mounting base (11) is mounted on the guiding parts (121 and 122), the drive coil (131) is disposed corresponding to the drive magnet (132) and is capable of moving relative to the drive magnet (132) during power-on, to drive the mounting base (11) to slide relative to the bracket (12) along the guiding parts (121 and 122) in a direction of the optical axis (M) of the lens. The bracket (12) and the guiding parts (121 and 122) are integrally formed by using an injection molding process. The sliding focus drive apparatus (1) has advantages of a small quantity of parts and components and a simple structure. This helps improve integrity of the sliding focus drive apparatus (1) and reduce production costs.

## Description

This application claims priority to Chinese Patent Application No. 202310351331.9, filed with the China National Intellectual Property Administration on March 24, 2023 and entitled "SLIDING FOCUS DRIVE APPARATUS, LENS MODULE, AND ELECTRONIC DEVICE", which is incorporated herein by reference in its entirety.

### TECHNICAL FIELD

This application relates to the field of camera technologies, and in particular, to a sliding focus drive apparatus, a lens module, and an electronic device.

### BACKGROUND

With updating and iteration of electronic devices, users have increasingly high requirements on an image shooting function of the electronic devices, and an autofocus camera has become one of essential components in the electronic devices.

In the conventional technology, an autofocus motor with a spring leaf may be used to drive a lens for focusing, and the lens is driven and supported for focusing and moving by using a deformation capability of a spring leaf. However, because the spring leaf is limited by an elasticity coefficient (that is, a value of k) of the spring leaf, it is difficult to increase a focusing stroke. To increase the focusing stroke of the lens, in the conventional technology, a ball-type autofocus motor may be used to drive the lens for focusing, and the lens is driven for focusing through relative movement between a plurality of balls and the lens. Such a structure is not limited by the elasticity coefficient of the autofocus motor with the spring leaf, and the focusing stroke of the lens can be increased to some extent. However, a structure with the plurality of balls has a large quantity of parts and a complex structure.

It can be learned that, in the conventional technology, it is difficult to consider both a long focusing stroke and a simple structure of the lens.

### SUMMARY

Embodiments of this application provide a sliding focus drive apparatus, a lens module, and an electronic device, to resolve a problem in the conventional technology that it is difficult to consider both a long focusing stroke and a simple structure of a lens.

This application provides a sliding focus drive apparatus, including a bracket, a drive assembly, and a mounting base that is configured to mount a lens. The drive assembly includes a drive coil and a drive magnet, both the drive coil and the drive magnet are located on a first side surface of the mounting base, and the first side surface is parallel to an optical axis that is of the lens and that is presented when the lens is mounted on the mounting base. A guiding part is disposed on the bracket, the mounting base is mounted on the guiding part, the drive coil is disposed corresponding to the drive magnet and is capable of moving relative to the drive magnet during power-on, to drive the mounting base to slide relative to the bracket along the guiding part in a direction of the optical axis of the lens. The bracket and the guiding part are integrally formed by using an injection molding process.

According to the sliding focus drive apparatus in this application, the drive magnet disposed on the first side surface of the mounting base and the drive coil that is disposed corresponding to the drive magnet are used as the drive assembly, so that the sliding focus drive apparatus in this application is not limited by a difficulty of increasing a focusing stroke of a spring-leaf focus motor due to a limitation of an elasticity coefficient in the conventional technology. This helps increase a focusing stroke of the drive apparatus. In addition, in this application, the guiding part that is integrally formed with the bracket through injection molding provides a guiding function for relative movement between the mounting base and the bracket, so that stability and reliability of sliding of the mounting base can be improved. Further, in this application, the drive magnet and the drive coil in this application are disposed on a single side (that is, disposed on the first side surface of the mounting base), and the guiding part is integrally formed with the bracket by using the injection molding process. Therefore, the sliding focus drive apparatus in this application has advantages of a small quantity of parts and components and a simple structure. This helps improve integrity of the sliding focus drive apparatus and reduce production costs.

In some possible embodiments, an arrangement direction of magnetic poles in the drive magnet is consistent with a sliding direction of the mounting base, and the drive coil is parallel to a surface of the drive magnet.

In some possible embodiments, the drive magnet is a single-sided dipole magnet or a single-sided multipole magnet.

In some embodiments, there are a plurality of guiding parts, and the plurality of guiding parts are symmetrically distributed on two sides of the optical axis of the lens. The guiding parts that are symmetrically disposed help improve balance of the mounting base, so that the mounting base slides more smoothly. This helps improve image stabilization performance of the focus drive apparatus.

In some embodiments, the guiding part is in a semi-cylindrical shape or a hemispherical shape.

In some embodiments, at least one first guiding groove is provided on a side that is of the mounting base and that is opposite to the guiding part, at least some of the plurality of guiding parts are clamped in the at least one first guiding groove, the at least one first guiding groove extends along the direction of the optical axis of the lens, and the mounting base is capable of being driven to slide along a corresponding guiding part through the at least one first guiding groove.

In the sliding focus drive apparatus in this embodiment of this application, the first guiding groove corresponding to the guiding part is provided on the mounting base, and the mounting base can be clamped in the first guiding groove through the guiding part, so that shaking and tilting in a movement process can be avoided, and therefore, stability and reliability of the mounting base in a sliding process is improved, and image stabilization performance of the lens during focusing is effectively improved.

In some embodiments, a cross-sectional shape of the first guiding groove is V-shaped, and the guiding part clamped in the first guiding groove abuts against a groove wall of the first guiding groove.

In the sliding focus drive apparatus in this embodiment of this application, the first guiding groove whose cross-sectional shape is V-shaped can be clamped to the corresponding guiding part, so that positions of the guiding part and the bracket can be accurately positioned. This helps improve assembly precision and assembly efficiency of the focus drive apparatus.

In some embodiments, at least one second guiding groove is provided on the side that is of the mounting base and that is opposite to the guiding part, at least some of the plurality of guiding parts are mounted in the at least one second guiding groove, the at least one second guiding groove extends along the direction of the optical axis of the lens, and the mounting base is capable of being driven to slide along a corresponding guiding part through the at least one second guiding groove. In a direction perpendicular to the optical axis of the lens, a width of the second guiding groove is greater than a width of the guiding part mounted in the second guiding groove.

In the sliding focus drive apparatus in this embodiment of this application, the first guiding groove and the second guiding groove that correspond to the guiding part are provided on the mounting base, so that, through mutual cooperation among the guiding part, the first guiding groove, and the second guiding groove, the mounting base can further improve the stability and the reliability of the mounting base in the sliding process, and the image stabilization performance of the lens during focusing is effectively improved.

In some embodiments, a cross-sectional shape of the second guiding groove is U-shaped or L-shaped, and the guiding part mounted in the second guiding groove and a sidewall of the second guiding groove are spaced apart.

The second guiding groove whose cross-sectional shape is U-shaped or L-shaped is used, to cooperate with the first guiding groove to guide and position the mounting base, and improve the stability and the reliability of the mounting base in the sliding process. In addition, because the width of the second guiding groove is greater than the width (or may be understood as a width along the direction perpendicular to the optical axis of the lens) of the guiding part mounted in the second guiding groove, a specific mounting margin (or may be understood as tolerance space) for assembling the bracket and the mounting base can be provided. This helps improve the assembly efficiency of the focus drive apparatus.

In some embodiments, the drive magnet is disposed on the mounting base, the sliding focus drive apparatus further includes a magnetic component, and the magnetic component is disposed on the bracket and is capable of being magnetically attracted to the drive magnet, so that the mounting base is attached to the guiding part of the bracket.

According to the sliding focus drive apparatus in this embodiment of this application, the bracket is magnetically attracted to the drive magnet through the magnetic component, so that the mounting base can always be pressed against the guiding part of the bracket in the sliding process. Therefore, the mounting base can be ensured to slide stably, and stability of the focus drive apparatus is improved.

In some embodiments, the sliding focus drive apparatus further includes a position sensor and a drive controller.

The position sensor is mounted on the mounting base, to detect a real-time position of the mounting base and feed back the real-time position to the drive controller. The drive controller is electrically connected to the position sensor and the drive assembly, to receive the real-time position fed back by the position sensor and control, based on the real-time position, the drive assembly to drive the mounting base to slide.

According to the sliding focus drive apparatus in this embodiment of this application, the real-time position of the mounting base can be detected by using the position sensor and the real-time position is fed back to the drive controller, and the drive controller controls an action of the drive assembly based on the real-time position, to form a closed-loop drive control cycle to control the mounting base to slide, so that precision of a sliding position of the mounting base can be effectively improved. This helps improve focusing precision of the lens.

In some possible embodiments, the drive magnet includes a first magnetic pole and a second magnetic pole that are configured opposite to each other, and the position sensor is disposed at a junction between the first magnetic pole and the second magnetic pole.

In some possible embodiments, the position sensor is located on a side that is of the drive coil and that faces the mounting base, or located on a side that is of the drive coil and that is away from the mounting base.

In some embodiments, the sliding focus drive apparatus further includes an image stabilization assembly, and the image stabilization assembly includes a first coil, a second coil, a first magnet, and a second magnet.

The first coil is disposed corresponding to the first magnet and is capable of moving relative to the first magnet during power-on, to drive the mounting base to move in a first direction. The second coil is disposed corresponding to the second magnet and is capable of moving relative to the second magnet during power-on, to drive the mounting base to move in a second direction. The first direction, the second direction, and the direction of the optical axis of the lens are perpendicular to each other.

According to the sliding focus drive apparatus in this embodiment of this application, the first coil, the first magnet, the second coil, and the second magnet are used, so that the mounting base can move in the first direction and the second direction. Because the first direction, the second direction, and the optical axis of the lens are perpendicular to each other, movement of the mounting base in the first direction and/or the second direction is constrained. In other words, shaking of the mounting base in the first direction and/or the second direction is prevented. Therefore, the stability and the image stabilization performance of the focus drive apparatus can be further improved.

In some embodiments, the first coil and the second coil are located on a same plane, and the plane on which the first coil and the second coil are located is perpendicular to the optical axis of the lens.

In some possible embodiments, the first coil and the second coil are distributed at a right angle.

In some embodiments, both a plane on which the first coil is located and a plane on which the second coil is located are parallel to the optical axis of the lens.

This application further provides a lens module, including the sliding focus drive apparatus in the foregoing embodiments and a lens. The lens is mounted on the mounting base of the sliding focus drive apparatus.

Because the sliding focus drive apparatus used by the lens module in this embodiment of this application has advantages of good focusing stability, a simple structure, and low costs, the lens module in this embodiment of this application has the advantages of good focusing stability, a simple structure, and low costs.

This application further provides an electronic device, including the lens module mentioned in the foregoing embodiments.

Because the lens module used in the electronic device in this embodiment of this application has advantages of good focusing stability, a simple structure, and low costs, the electronic device in this embodiment of this application has advantages of a simple structure, low costs, and good image shooting performance.

### BRIEF DESCRIPTION OF DRAWINGS

FIG. 1 is a diagram of a partial three-dimensional structure of a sliding focus drive apparatus according to an embodiment of this application;
FIG. 2a is a diagram of a partial planar structure of a sliding focus drive apparatus according to an embodiment of this application;
FIG. 2b is an enlarged diagram of a partial structure in an area A1 in FIG. 2a;
FIG. 3a is a diagram of a partial three-dimensional structure of a sliding focus drive apparatus according to an embodiment of this application, where a bracket is hidden and not shown;
FIG. 3b is an enlarged diagram of a partial structure in an area A3 in FIG. 3a;
FIG. 4a is a diagram of a partial three-dimensional structure of a sliding focus drive apparatus according to an embodiment of this application, where a mounting base is hidden and not shown;
FIG. 4b is an enlarged diagram of a partial structure in an area A4 in FIG. 4a;
FIG. 5 is a diagram of a structure of a drive assembly in a sliding focus drive apparatus according to an embodiment of this application, where the drive assembly uses a single-sided dipole structure;
FIG. 6 is a diagram of a structure of a drive assembly in a sliding focus drive apparatus according to an embodiment of this application, where the drive assembly uses a single-sided multipole structure;
FIG. 7a is a diagram of a partial three-dimensional structure of a sliding focus drive apparatus according to an embodiment of this application, where a mounting base and a drive assembly are hidden and not shown;
FIG. 7b is an enlarged diagram of a partial structure in an area A2 in FIG. 7a;
FIG. 8 is a diagram of a partial three-dimensional structure of a bracket in a sliding focus drive apparatus according to an embodiment of this application;
FIG. 9 is a diagram of a partial three-dimensional structure of a sliding focus drive apparatus according to an embodiment of this application, where a position sensor is mounted on a mounting base;
FIG. 10a is a diagram of a partial three-dimensional structure of a sliding focus drive apparatus according to an embodiment of this application, where a first coil and a second coil are located on a same plane, and both a first magnet and a second magnet are single-sided monopole magnets;
FIG. 10b is a diagram of a partial three-dimensional structure of a sliding focus drive apparatus according to an embodiment of this application, where a first coil and a second coil are located on a same plane, and both a first magnet and a second magnet are single-sided dipole magnets;
FIG. 10c is a diagram of a partial three-dimensional structure of a sliding focus drive apparatus according to an embodiment of this application, where a first magnet and a second magnet are located on different planes; and
FIG. 11 is a diagram of a three-dimensional structure of a lens module according to an embodiment of this application.

Descriptions of reference numerals:
1: sliding focus drive apparatus;
10: casing; 11: mounting base; 111: first side surface; 111A: first guiding groove; 111B: second guiding groove; 12: bracket; 120: mounting hole; 121: guiding part; 122: guiding part; 123: guiding part; 124: guiding part; 13: drive assembly; 131: drive coil; 132: drive magnet; 1321: first magnetic pole; 1322: second magnetic pole; 14: magnetic component; 15: position sensor;
16: image stabilization assembly; 161: first coil; 162: second coil; 163: first magnet; 164: second magnet;
F1: first direction; F2: second direction; M: optical axis of a lens; S1: boundary surface; N: symmetry axis;
2: lens module;
20: lens; 21: circuit board.

### DESCRIPTION OF EMBODIMENTS

The following describes implementations of this application by using specific embodiments, and other advantages and effects of this application may be readily understood by a person skilled in the art from content disclosed in this specification. Although this application is described with reference to some embodiments, it does not mean that features of this application are limited only to the implementations. On the contrary, a purpose of describing this application with reference to an implementation is to cover another option or modification that may be derived based on claims of this application. To provide an in-depth understanding of this application, the following descriptions include a plurality of specific details. This application may be alternatively implemented without using these details. In addition, to avoid confusion or blurring a focus of this application, some specific details are omitted from the description. It should be noted that embodiments of this application and the features in embodiments may be mutually combined when no conflict occurs.

It should be noted that, in this specification, similar reference numerals and letters in the following accompanying drawings indicate similar items. Therefore, once an item is defined in an accompanying drawing, the item does not need to be further defined or interpreted in following accompanying drawings.

In descriptions of this application, it should be noted that orientation or position relationships indicated by terms "center", "above", "below", "left", "right", "vertical", "horizontal", "inside", "outside", and the like are orientation or position relationships based on the accompanying drawings, and are merely intended for ease of describing this application and simplifying the descriptions, rather than indicating or implying that a described apparatus or element needs to have a specific orientation or needs to be constructed and operated in a specific orientation. Therefore, such terms cannot be construed as a limitation on this application. In addition, terms "first" and "second" are merely used for a purpose of description, and shall not be understood as an indication or implication of relative importance.

In the descriptions of this application, it should be noted that, unless otherwise expressly specified and limited, terms "mount", "interconnect", and "connect" should be understood in a broad sense. For example, the terms may indicate a fixed connection, a detachable connection, or an integral connection, may indicate a mechanical connection or an electrical connection, or may indicate a direct interconnection, an indirect interconnection through an intermediate medium, or internal communication between two elements. For a person of ordinary skill in the art, a specific meaning of the foregoing terms in this application may be understood based on a specific situation.

In the descriptions of this application, it should be understood that, in this application, an "electrical connection" may be understood as physical contact and electrical conduction of components, or may be understood as a form in which different components in a line structure are connected through a physical line that can transmit an electrical signal, such as a printed circuit board (printed circuit board, PCB) copper foil or a conducting wire. "Communication connection" may be electrical signal transmission, including a wireless communication connection and a wired communication connection. The wireless communication connection does not require a physical medium, and does not belong to a connection relationship that limits a product structure.

To make the objectives, technical solutions, and advantages of this application clearer, the following further describes the implementations of this application in detail with reference to the accompanying drawings.

This application may be applied to various electronic devices with a zoom camera, for example, may be applied to a smartphone, a tablet computer, a camera, an action camera, and a smartwatch.

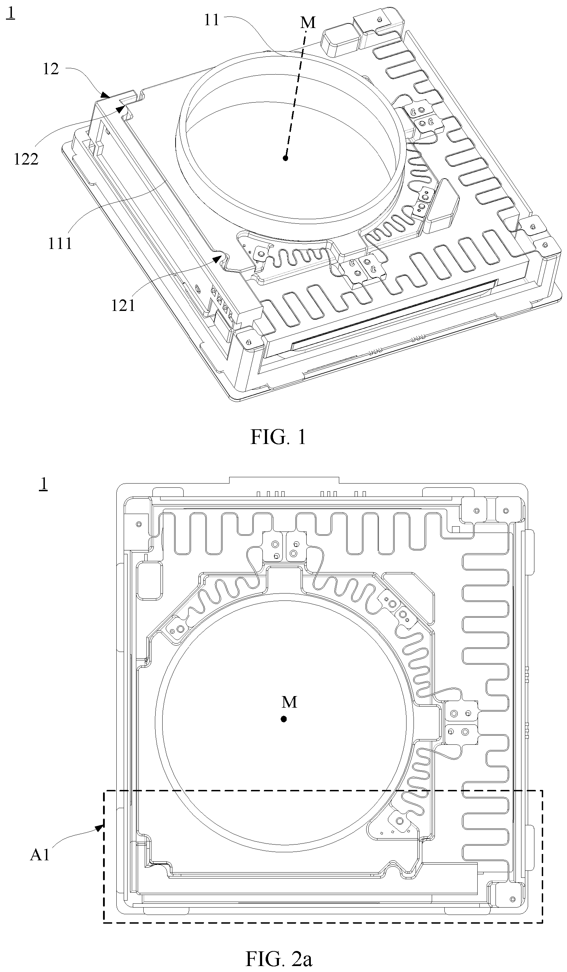

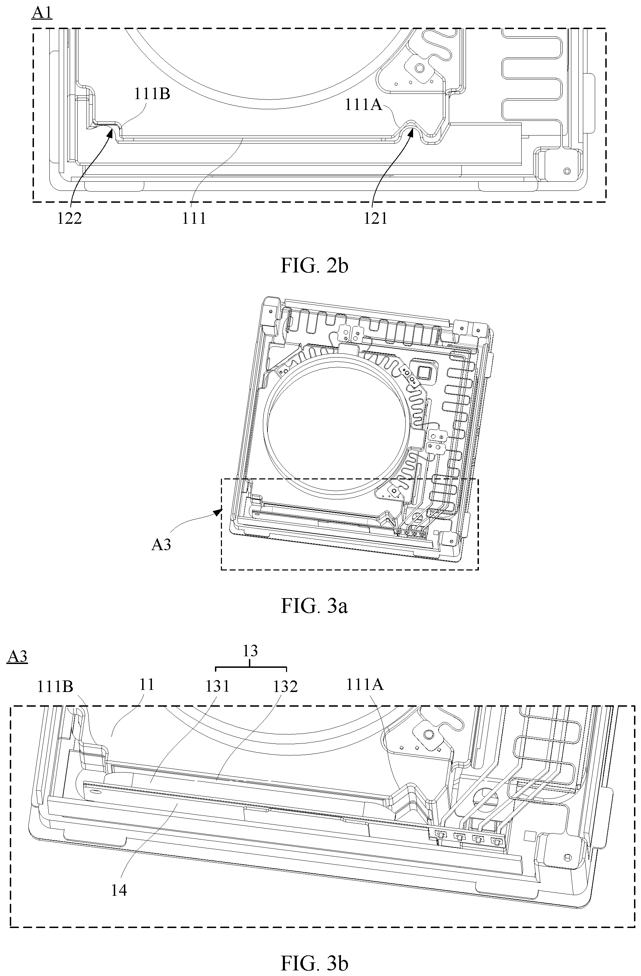

Refer to FIG. 1 to FIG. 3b. FIG. 1 is a diagram of a partial three-dimensional structure of a sliding focus drive apparatus according to an embodiment of this application. FIG. 2a is a diagram of a partial planar structure of a sliding focus drive apparatus according to an embodiment of this application. FIG. 2b is an enlarged diagram of a partial structure in an area A1 in FIG. 2a. FIG. 3a is a diagram of a partial three-dimensional structure of a sliding focus drive apparatus according to an embodiment of this application, where a bracket is hidden and not shown. FIG. 3b is an enlarged diagram of a partial structure in an area A3 in FIG. 3a.

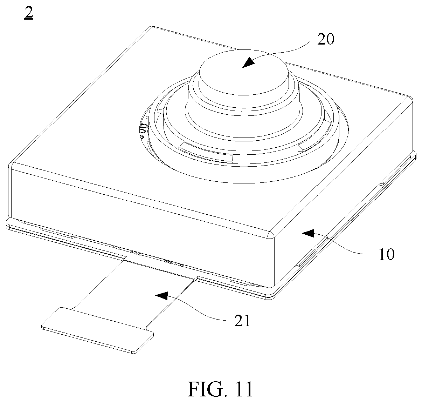

As shown in FIG. 1 to FIG. 3b, this application provides a sliding focus drive apparatus 1, including a bracket 12, a drive assembly 13, and a mounting base 11 that is configured to mount a lens 20 (refer to FIG. 11). As shown in FIG. 3a and FIG. 3b, the drive assembly 13 includes a drive coil 131 and a drive magnet 132. Both the drive coil 131 and the drive magnet 132 are located on a first side surface 111 of the mounting base 11, and the first side surface is parallel to an optical axis M that is of the lens and that is presented when the lens 20 (refer to FIG. 11) is mounted on the mounting base 11. For example, the first side surface may be an upper side, a lower side, a left side, or a right side of the mounting base 11 in a direction of the optical axis M of the lens.

Guiding parts (for example, a guiding part 121 and a guiding part 122) are disposed on the bracket 12. The mounting base 11 is mounted on the guiding parts (for example, the guiding part 121 and the guiding part 122). The drive coil 131 is disposed corresponding to the drive magnet 132 and can move relative to the drive magnet 132 during power-on, to drive the mounting base 11 to slide relative to the bracket 12 along the guiding parts (for example, the guiding part 121 and the guiding part 122) in the direction of the optical axis M of the lens. The bracket 12 and the guiding parts (for example, the guiding part 121 and the guiding part 122) are integrally formed by using an injection molding process.

A person skilled in the art may understand that the integral injection molding process (or may be referred to as the injection molding process) is a process of making a melted raw material into a semi-finished product in a specific shape through operations such as pressurization, injection, cooling, and detachment. Therefore, materials of the bracket 12 and the guiding parts (for example, the guiding part 121 and the guiding part 122) are not limited in this application. Provided that a material can be formed by using the integral injection molding process, the material does not depart from the scope of embodiments of this application. For example, the material may be polystyrene, polypropylene, or polycarbonate.

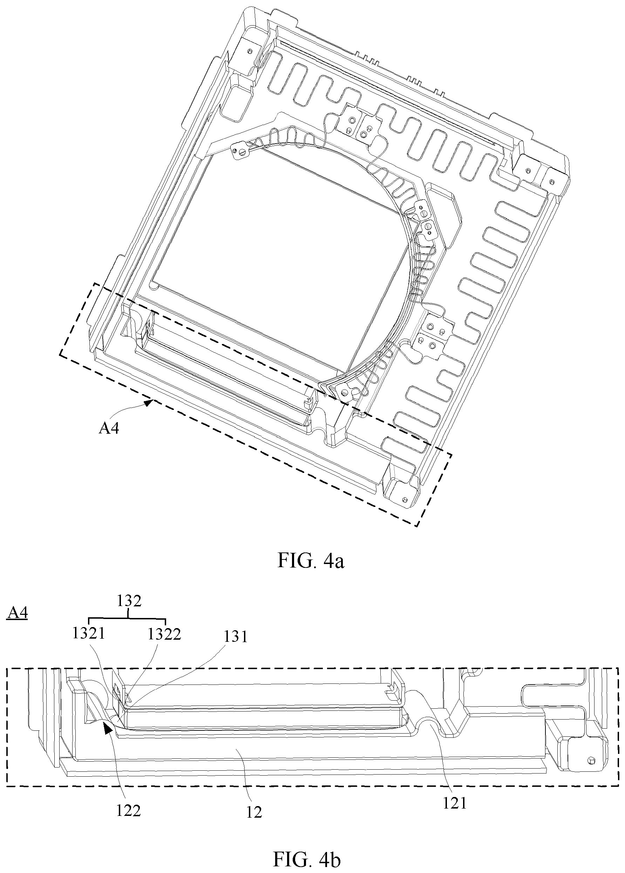

Refer to FIG. 3a to FIG. 4b for understanding. FIG. 4a is a diagram of a partial three-dimensional structure of the sliding focus drive apparatus according to an embodiment of this application, where the mounting base is hidden and not shown. FIG. 4b is an enlarged diagram of a partial structure in an area A4 in FIG. 4a.

That the drive coil 131 and the drive magnet 132 move relative to each other may be understood as that one of the drive coil 131 and the drive magnet 132 is fixed, and the other moves relative to the fixed one. For example, in an implementation, as shown in FIG. 3b and FIG. 4b, it is understood with reference to FIG. 1 and FIG. 2b that the drive coil 131 is disposed on the bracket 12 and is fixed, the drive magnet 132 is disposed on the first side surface of the mounting base 11, and during power-on, a magnetic force generated between the drive coil 131 and the drive magnet 132 enables the drive magnet 132 to move relative to the drive coil 131 and drives the mounting base 11 to slide along the optical axis M of the lens. In another alternative implementation, the drive coil 131 may alternatively be disposed on the mounting base 11, the drive magnet 132 may be disposed on the bracket 12 and is fixed, and a magnetic force generated between the drive coil 131 and the drive magnet 132 further enables the drive coil 131 to move relative to the drive magnet 132 and drives the mounting base 11 to slide along the optical axis M of the lens. Provided that the drive coil 131 and the drive magnet 132 can move relative to each other and the mounting base 11 can be driven to slide along the optical axis M of the lens, it does not depart from the scope of embodiments of this application.

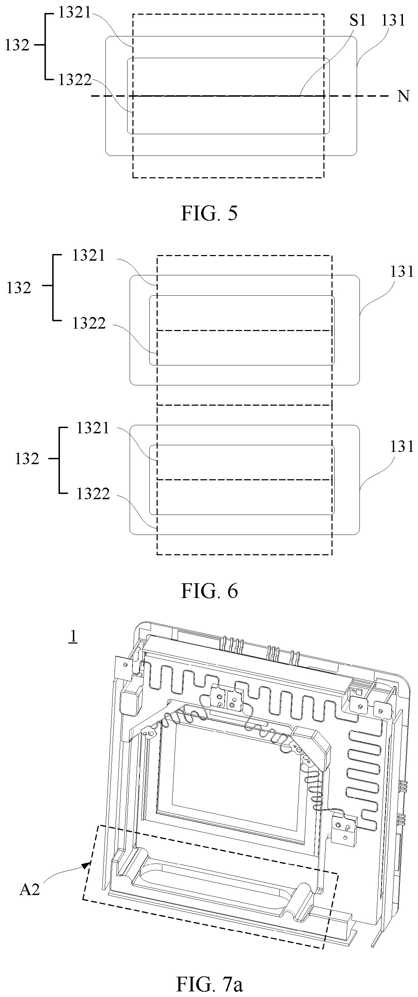

Further, a form of cooperation between the drive coil 131 and the drive magnet 132 is not limited. As shown in FIG. 5, there may be one drive coil 131, the drive magnet 132 is a single-sided dipole magnet, and the drive coil 131 and the drive magnet 132 are disposed face to face. Specifically, in an implementation, the drive magnet 132 has a first magnetic pole 1321 and a second magnetic pole 1322 that are connected opposite to each other, and a boundary surface S1 of the first magnetic pole 1321 and the second magnetic pole 1322 is located in an annular structure of the drive coil 131. Alternatively, it may be understood that the drive coil 131 is of an axisymmetric structure, and the first magnetic pole 1321 and the second magnetic pole 1322 are symmetrically disposed with respect to a symmetry axis N of the drive coil 131. In an implementation, the boundary surface S1 of the first magnetic pole 1321 and the second magnetic pole 1322 coincides with the symmetry axis N of the drive coil 131. In another alternative implementation, as shown in FIG. 6, there may be a plurality of drive coils 131, and the plurality of drive coils 131 are disposed in parallel. Correspondingly, the drive magnet 132 may be, for example, a single-sided multipole magnet. Specifically, for example, the drive magnet 132 may have two first magnetic poles 1321 and two second magnetic poles 1322, one first magnetic pole 1321 and one second magnetic pole 1322 are a group, two groups of magnetic poles are disposed in parallel, and each group of magnetic poles and a corresponding drive coil 131 are disposed face to face.

That the drive coil 131 and the drive magnet 132 are disposed face to face may be understood as that the drive coil 131 is disposed parallel to a surface of the drive magnet 132.

A person skilled in the art may understand that a single-sided magnet may be understood as a magnet with strong magnetism on one side and weak magnetism on the other side. A magnetic pole is a part with strongest magnetism of a magnet. One magnet usually has two magnetic poles, one magnetic pole points to the south and is referred to as a south pole (S pole), and the other magnetic pole points to the north and is referred to as a north pole (N pole).

In an implementation, it is understood with reference to FIG. 5, FIG. 6, and FIG. 1 that an arrangement direction of the magnetic poles (for example, the first magnetic pole 1321 and the second magnetic pole 1322) in the drive magnet 132 is consistent with a sliding direction of the mounting base, or it may be understood that the arrangement direction of the magnetic poles (for example, the first magnetic pole 1321 and the second magnetic pole 1322) in the drive magnet 132 is parallel to the optical axis M of the lens.

A material of the drive magnet 132 may be, for example, magnet. In another alternative implementation, the drive magnet 132 may alternatively be another material that can be coupled to a magnetic field of the coil.

It should be noted that being parallel and perpendicular mentioned in this application are not mathematical concepts in a strict sense, and a specific angular deviation is allowed, which may be understood as being roughly parallel and roughly perpendicular.

According to the sliding focus drive apparatus 1 in this application, the drive magnet 132 disposed on the first side surface of the mounting base 11 and the drive coil 131 that is disposed corresponding to the drive magnet 132 are used as the drive assembly 13, so that the sliding focus drive apparatus 1 in this application is not limited by a difficulty of increasing a focusing stroke of a spring-leaf focus motor due to a limitation of an elasticity coefficient in the conventional technology. This helps increase a focusing stroke of the drive apparatus. In addition, in this application, the guiding parts (for example, the guiding part 121 and the guiding part 122) that are integrally formed with the bracket 12 through injection molding provide guiding functions for relative movement between the mounting base 11 and the bracket 12, so that stability and reliability of sliding of the mounting base can be improved. Further, in this application, the drive magnet 132 and the drive coil 131 are disposed on a single side (that is, disposed on the first side surface 111 of the mounting base), and the guiding parts (for example, the guiding part 121 and the guiding part 122) are integrally formed with the bracket 12 by using the injection molding process. Therefore, the sliding focus drive apparatus 1 in this application has advantages of a small quantity of parts and components and a simple structure. This helps improve integrity of the sliding focus drive apparatus 1 and reduce production costs. Moreover, in this application, the guiding parts (for example, the guiding part 121 and the guiding part 122) and the bracket 12 are integrally formed. Therefore, an impact damage on the bracket 12 during falling can be avoided. This helps improve reliability of an internal part of the focus drive apparatus during falling.

It can be learned that the sliding focus drive apparatus in this application has advantages of a long focusing stroke and a small moving tilt angle and also has advantages of a simple structure and low costs, and has a superior market prospect.

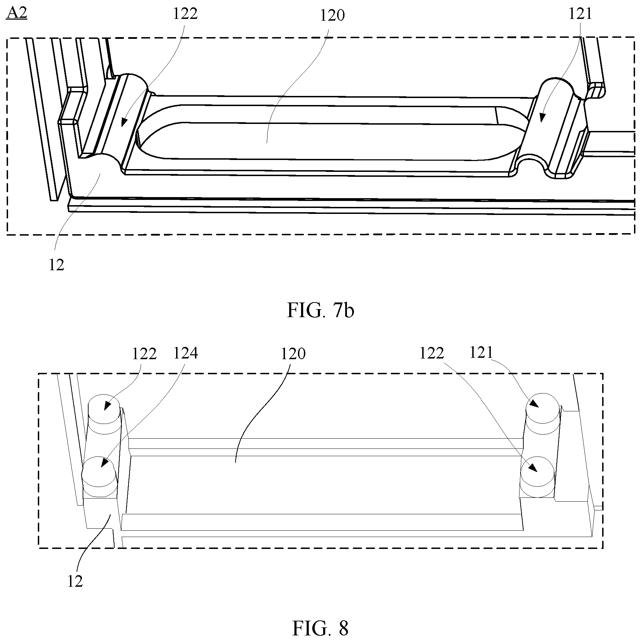

FIG. 7a is a diagram of a partial three-dimensional structure of a sliding focus drive apparatus according to an embodiment of this application, where a mounting base and a drive assembly are hidden and not shown. FIG. 7b is an enlarged diagram of a partial structure in an area A2 in FIG. 7a. FIG. 8 is a diagram of a partial three-dimensional structure of a bracket in a sliding focus drive apparatus according to an embodiment of this application.

In this application, a quantity of guiding parts is not limited. For example, there may be one or more guiding parts, for example, there may be two, four, or six guiding parts. The plurality of guiding parts are symmetrically distributed on two sides of the optical axis M of the lens. In an implementation, as shown in FIG. 7a and FIG. 7b, it is understood with reference to FIG. 1, FIG. 2a, and FIG. 2b that there are the plurality of guiding parts, for example, including the guiding part 121 and the guiding part 122, and the guiding part 121 and the guiding part 122 are symmetrically distributed on two sides of the optical axis M of the lens, or it may be understood that symmetry axes of the guiding part 121 and the guiding part 122 are parallel to the optical axis M of the lens. The guiding parts (for example, the guiding part 121 and the guiding part 122) that are symmetrically disposed help improve balance of the mounting base 11, so that the mounting base slides more smoothly. This helps improve image stabilization performance of the focus drive apparatus.

Further, a shape of the guiding part is not limited. In an implementation, as shown in FIG. 7a and FIG. 7b, the guiding part may be in a semi-cylindrical shape. In an implementation, the guiding part may alternatively be in a hemispherical shape. As shown in FIG. 8, the guiding part 121, the guiding part 122, a guiding part 123, and a guiding part 124 that are in hemispherical shapes are symmetrically distributed on two sides of the optical axis of the lens, or it may be understood that symmetry axes of the guiding part 121, the guiding part 122, the guiding part 123, and the guiding part 124 are parallel to the optical axis M of the lens. In another alternative implementation, the guiding part may alternatively be in a cylindrical shape, a spherical shape, or another shape. In an implementation, as shown in FIG. 7a to FIG. 8, it is understood with reference to FIG. 3b that the bracket 12 is further provided with a mounting hole 120 that is configured to embed the drive coil 131, the drive coil 131 is mounted in the mounting hole 120, and the plurality of guiding parts (for example, the guiding part 121 and the guiding part 122) are located on two sides of the mounting hole 120.

Refer to FIG. 1 to FIG. 3b. At least one first guiding groove 111A is provided on a side that is of the mounting base 11 and that is opposite to the guiding parts (for example, the guiding part 121 and the guiding part 122), at least some of the plurality of guiding parts are clamped in the at least one first guiding groove 111A, the at least one first guiding groove 111A extends along a direction of the optical axis M of the lens, and the mounting base 11 can be driven to slide along a corresponding guiding part (for example, the guiding part 121) through the at least one first guiding groove 111A. A quantity and a shape of the first guiding groove 111A are not limited. In an implementation, as shown in FIG. 2b and FIG. 3b, a cross-sectional shape of the first guiding groove 111A is V-shaped, and the guiding part 121 is clamped in the first guiding groove 111A. Specifically, the guiding part 121 abuts against a groove wall of the first guiding groove 111A.

In the sliding focus drive apparatus 1 in this embodiment of this application, the first guiding groove 111A corresponding to the guiding part (for example, the guiding part 121) is provided on the mounting base 11, and the mounting base 11 can be clamped in the first guiding groove 111A through the guiding part (for example, the guiding part 121), so that shaking and tilting in a movement process can be avoided, a dynamic tilt angle of the focus drive apparatus is reduced, and therefore, stability and reliability of the mounting base 11 in a sliding process is improved, and image stabilization performance of the lens during focusing is effectively improved. Further, in the sliding focus drive apparatus 1 in this embodiment of this application, the first guiding groove 111A whose cross-sectional shape is V-shaped can be clamped to the corresponding guiding part (for example, the guiding part 121), so that positions of the guiding part (for example, the guiding part 121) and the bracket 12 can be accurately positioned. This helps improve assembly precision and assembly efficiency of the focus drive apparatus 1.

Further, refer to FIG. 1 to FIG. 3b. At least one second guiding groove 111B is provided on the side that is of the mounting base 11 and that is opposite to the guiding parts (for example, the guiding part 121 and the guiding part 122), at least some of the plurality of guiding parts are mounted in the at least one second guiding groove 111B, the at least one second guiding groove 111B extends along the direction of the optical axis M of the lens, and the mounting base 11 can be driven to slide along a corresponding guiding part (for example, the guiding part 122) through the at least one second guiding groove 111B. In a direction perpendicular to the optical axis M of the lens, a width of the second guiding groove 111B is greater than a width of the guiding part (for example, the guiding part 122) mounted in the second guiding groove 111B. A quantity and a shape of the second guiding groove 111B are not limited. In an implementation, as shown in FIG. 2b, a cross-sectional shape of the second guiding groove 111B is L-shaped. Specifically, the guiding part 122 and a sidewall of the second guiding groove 111B are spaced apart. In another alternative implementation, the cross-sectional shape of the second guiding groove 111B is U-shaped or another shape. In the sliding focus drive apparatus 1 in this embodiment of this application, the first guiding groove 111A and the second guiding groove 111B that correspond to the guiding part are provided on the mounting base 11, so that, through mutual cooperation among the guiding parts (for example, the guiding part 121 and the guiding part 122), the first guiding groove 111A, and the second guiding groove 111B, the mounting base 11 can further improve the stability and the reliability of the mounting base in the sliding process, and the image stabilization performance of the lens during focusing is effectively improved. Further, the second guiding groove 111B whose cross-sectional shape is U-shaped or L-shaped is used, to cooperate with the first guiding groove 111A to guide and position the mounting base 11, and improve the stability and the reliability of the mounting base 11 in the sliding process. In addition, because the width of the second guiding groove 111B is greater than the width (or may be understood as a width along the direction perpendicular to the optical axis M of the lens) of the guiding part (for example, the guiding part 122) mounted in the second guiding groove 111B, a specific mounting margin (or may be understood as tolerance space) for assembling the bracket 12 and the mounting base 11 can be provided. This helps improve the assembly efficiency of the focus drive apparatus 1.

A person skilled in the art may understand that the mounting base 11 may not be provided with the second guiding groove 111B, and the mounting base 11 is in direct contact with the guiding part 122 through a surface that is of the mounting base 11 and that faces the guiding part 122 to slide. Such a structure may also be understood as a planar structure, and may also support the guiding part 122. In addition, left and right sides of the planar structure are not limited, so that the mounting margin (or may be understood as tolerance space) for assembling the bracket 12 and the mounting base 11 can be provided.

In an implementation, a lubricating material, for example, grease or a surface coating, is coated between both the first guiding groove 111A and the second guiding groove 111B and the corresponding guiding parts. This can reduce friction in the sliding process, improve sliding smoothness of the mounting base, reduce power consumption, and improve control precision. The lubricating material may be coated on the first guiding groove 111A and/or the second guiding groove 111B, or may be coated on the guiding part. This is not limited in this application.

In an implementation, as shown in FIG. 3b, it is understood with reference to FIG. 1 that the sliding focus drive apparatus further includes a magnetic component 14, the drive magnet 132 is disposed on the mounting base 11, and the magnetic component 14 is disposed on the bracket 12 and can be magnetically attracted to the drive magnet 132. In an implementation, the magnetic component 14 is located on a side that is of the drive coil 131 and that is away from the drive magnet 132, and the bracket 12 is magnetically attracted to the drive magnet 132 through the magnetic component 14, so that the mounting base 11 is attached to the guiding parts (for example, the guiding part 121 and the guiding part 122) of the bracket 12. For example, the magnetic component 14 may be a metal member or a magnet. A material of metal is not limited, and may be a material that can be absorbed by the magnet, for example, iron, nickel, or cobalt.

According to the sliding focus drive apparatus in this embodiment of this application, the bracket 12 is magnetically attracted to the drive magnet 132 through the magnetic component, so that the mounting base 11 can always be pressed against the guiding parts of the bracket 12 in the sliding process. Therefore, the mounting base 11 can be ensured to slide stably, and stability of the focus drive apparatus 1 is improved.

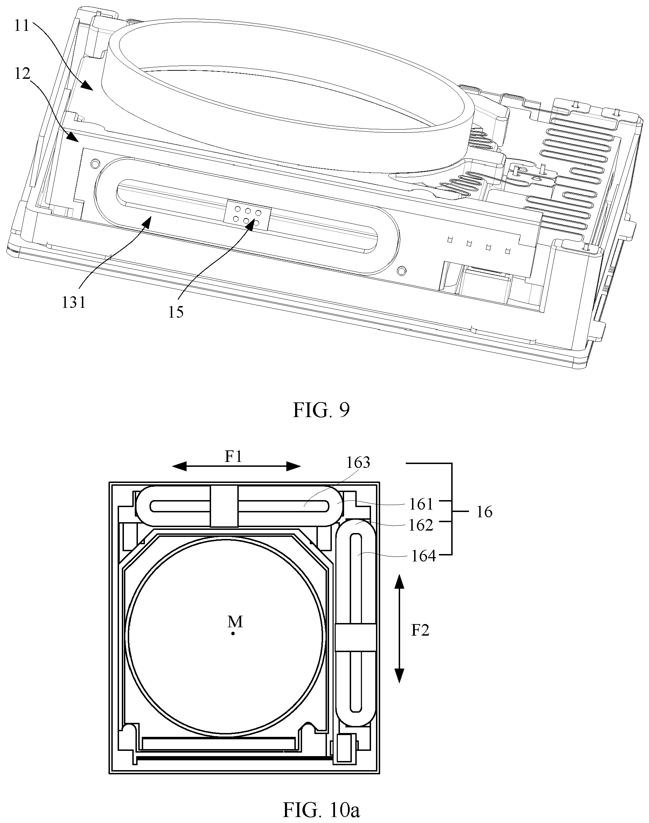

In an implementation, refer to FIG. 9, and with reference to FIG. 3b, FIG. 9 is a diagram of a partial three-dimensional structure of a sliding focus drive apparatus according to an embodiment of this application. The sliding focus drive apparatus 1 further includes a position sensor 15 and a drive controller (not shown in the figure).

The position sensor 15 is mounted on the mounting base 11, to detect a real-time position of the mounting base 11 and feed back the real-time position to the drive controller (not shown in the figure). The drive controller (not shown in the figure) is electrically connected to the position sensor 15 and the drive assembly 13, to receive the real-time position fed back by the position sensor 15 and control, based on the real-time position, the drive assembly 13 to drive the mounting base 11 to slide.

Specifically, it is understood with reference to FIG. 5 and FIG. 9 that the position sensor 15 may be, for example, disposed at a junction between the first magnetic pole 1321 and the second magnetic pole 1322, or it may be understood that the position sensor 15 is disposed corresponding to the boundary surface S1 of the first magnetic pole 1321 and the second magnetic pole 1322. The position sensor 15 may be disposed on an inner side of the drive coil 131 (or may be understood as a side facing the mounting base 11), or may be disposed on an outer side of the drive coil 131 (or may be understood as a side away from the mounting base 11).

A type of the position sensor 15 is not limited, for example, the position sensor 15 may be a TMR (tunnel magnetoresistance effect, tunnel magneto-resistance effect) sensor, a Hall position sensor (Hall-effect position sensor), or the like. In another alternative implementation, the position sensor 15 may alternatively be another sensor that can detect a real-time position.

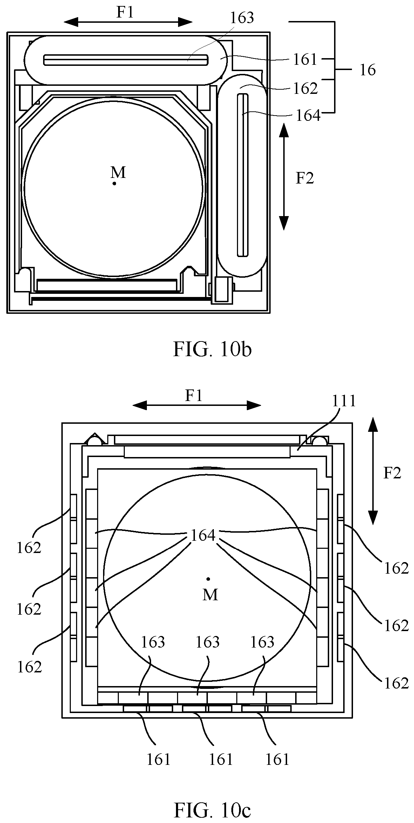

Refer to FIG. 10a to FIG. 10c. FIG. 10a is a diagram of a partial three-dimensional structure of a sliding focus drive apparatus according to an embodiment of this application. FIG. 10b is a diagram of a partial three-dimensional structure of a sliding focus drive apparatus according to an embodiment of this application. FIG. 10c is a diagram of a partial three-dimensional structure of a sliding focus drive apparatus according to an embodiment of this application.

In this embodiment of this application, the sliding focus drive apparatus 1 further includes an image stabilization assembly 16. The image stabilization assembly 16 includes a first coil 161, a second coil 162, a first magnet 163, and a second magnet 164.

The first coil 161 is disposed corresponding to the first magnet 163 and can move relative to the first magnet 163 during power-on, to drive the mounting base 11 to move in a first direction F1. The second coil 162 is disposed corresponding to the second magnet 164 and can move relative to the second magnet 164 during power-on, to drive the mounting base 11 to move in a second direction F2. The first direction F1, the second direction F2, and the direction of the optical axis M of the lens are perpendicular to each other.

In an implementation, both the first magnet 163 and the second magnet 164 are disposed on the mounting base 11, both the first coil 161 and the second coil 162 are disposed on the bracket, the first coil 161 and the first magnet 163 are disposed face to face, and the second coil 162 and the second magnet 164 are disposed face to face. In another alternative implementation, the first coil 161 and the second coil 162 may alternatively be disposed on the mounting base 11, both the first magnet 163 and the second magnet 164 are disposed on the bracket, the first magnet 163 and the first coil 161 are disposed face to face, and the second magnet 164 and the second coil 162 are disposed face to face.

Quantities and relative positions of the first coil 161, the second coil 162, the first magnet 163, and the second magnet 164 are not limited. For example, a structure in which a single-sided monopole magnet cooperates with the coil may be used, a structure in which a single-sided dipole magnet cooperates with the coil may be used, or a structure in which a single-sided multipole magnet cooperates with the coil may be used. Provided that mutual cooperation can be implemented, and the mounting base 11 is constrained by two directions that are perpendicular to each other, that is, the first direction F1 and the second direction F2, in the sliding process, it does not depart from the scope of embodiments of this application. In an implementation, as shown in FIG. 10a and FIG. 10b, the first coil 161 and the second coil 162 are located on a same plane, and the plane on which the first coil 161 and the second coil 162 are located is perpendicular to the optical axis M of the lens. For example, the first coil 161 and the second coil 162 are distributed at a right angle of 90°. In an implementation, in the image stabilization assembly shown in FIG. 10a, both the first magnet 163 and the second magnet 164 are single-sided monopole magnets. In an implementation, in the image stabilization assembly shown in FIG. 10b, both the first magnet 163 and the second magnet 164 are single-sided dipole magnets.

In another alternative implementation, the image stabilization assembly is located on a side surface that is of the mounting base 11 and that is parallel to the optical axis M of the lens. For example, both the plane on which the first coil 161 is located and the plane on which the second coil 162 is located are parallel to the optical axis M of the lens. In an implementation, as shown in FIG. 10c, in the direction of the optical axis M of the lens, the first side surface 111 (that is, a position of the drive assembly) is located on an upper side of the mounting base, and the image stabilization assembly is located on a left side, and/or a right side, and/or a lower side of the mounting base.

In an implementation, as shown in FIG. 10c, there are a plurality of first coils 161 and a plurality of first magnets 163, the plurality of first coils 161 and the plurality of first magnets 163 are disposed on the lower side of the mounting base, there are a plurality of second coils 162 and a plurality of second magnets 164, and the plurality of second coils 162 and the plurality of second magnets 164 are distributed on the left side and the right side of the mounting base. For example, the first magnet 163 and the second magnet 164 may be single-sided dipole magnets or single-sided multipole magnets.

According to the sliding focus drive apparatus 1 in this embodiment of this application, the first coil 161, the first magnet 163, the second coil 162, and the second magnet 164 are used, so that the mounting base 11 can move in the first direction F1 and the second direction F2. Because the first direction F1, the second direction F2, and the optical axis M of the lens are perpendicular to each other, movement of the mounting base in the first direction F1 and/or the second direction F2 is constrained. In other words, shaking of the mounting base in the first direction F1 and/or the second direction F2 is prevented. Therefore, the stability and the image stabilization performance of the focus drive apparatus 1 can be further improved.

Refer to FIG. 11. This application further provides a lens module 2, including the sliding focus drive apparatus 1 in the foregoing embodiments and a lens 20. The lens 20 is mounted on the mounting base 11 of the sliding focus drive apparatus 1. A circuit board 21 is further disposed on the lens module 2, and may be configured for external electrical connection, for example, may be connected to a power supply, a mainboard of an electronic device, or a controller of the lens module. For example, the circuit board 21 may be an FPC (Flexible Printed Circuit, flexible printed circuit board). Further, the lens module 2 further includes a casing 10, a bracket 12 of the sliding focus drive apparatus is mounted on the casing 10 in a fastened manner, and the casing 10 covers at least a part of the sliding focus drive apparatus. For example, the lens module 2 may be a wide-angle lens, a standard lens, a telephoto lens, or an ultra-wide-angle lens.

Because the sliding focus drive apparatus 1 used by the lens module 2 in this embodiment of this application has advantages of good focusing stability, a simple structure, and low costs, the lens module 2 in this embodiment of this application has the advantages of good focusing stability, a simple structure, and low costs.

This application further provides an electronic device, including the lens module 2 in the foregoing embodiments.

Because the lens module 2 used in the electronic device in this embodiment of this application has advantages of good focusing stability, a simple structure, and low costs, the electronic device in this embodiment of this application has advantages of a simple structure, low costs, and good image shooting performance.

It is clear that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A sliding focus drive apparatus, comprising a bracket, a drive assembly, and a mounting base that is configured to mount a lens, wherein the drive assembly comprises a drive coil and a drive magnet, both the drive coil and the drive magnet are located on a first side surface of the mounting base, and the first side surface is parallel to an optical axis that is of the lens and that is presented when the lens is mounted on the mounting base;
a guiding part is disposed on the bracket, the mounting base is mounted on the guiding part, the drive coil is disposed corresponding to the drive magnet and is capable of moving relative to the drive magnet during power-on, to drive the mounting base to slide relative to the bracket along the guiding part in a direction of the optical axis of the lens; and
the bracket and the guiding part are integrally formed by using an injection molding process.

2. The sliding focus drive apparatus according to claim 1, wherein there are a plurality of guiding parts, and the plurality of guiding parts are symmetrically distributed on two sides of the optical axis of the lens.

3. The sliding focus drive apparatus according to claim 1 or 2, wherein the guiding part is in a semi-cylindrical shape or a hemispherical shape.

4. The sliding focus drive apparatus according to claim 2, wherein at least one first guiding groove is provided on a side that is of the mounting base and that is opposite to the guiding part, at least some of the plurality of guiding parts are clamped in the at least one first guiding groove, the at least one first guiding groove extends along the direction of the optical axis of the lens, and the mounting base is capable of being driven to slide along a corresponding guiding part through the at least one first guiding groove.

5. The sliding focus drive apparatus according to claim 4, wherein a cross-sectional shape of the first guiding groove is V-shaped, and the guiding part clamped in the first guiding groove abuts against a groove wall of the first guiding groove.

6. The focus drive apparatus according to claim 4 or 5, wherein at least one second guiding groove is provided on the side that is of the mounting base and that is opposite to the guiding part, at least some of the plurality of guiding parts are mounted in the at least one second guiding groove, the at least one second guiding groove extends along the direction of the optical axis of the lens, and the mounting base is capable of being driven to slide along a corresponding guiding part through the at least one second guiding groove; and
in a direction perpendicular to the optical axis of the lens, a width of the second guiding groove is greater than a width of the guiding part mounted in the second guiding groove.

7. The sliding focus drive apparatus according to claim 6, wherein a cross-sectional shape of the second guiding groove is U-shaped or L-shaped, and the guiding part mounted in the second guiding groove and a sidewall of the second guiding groove are spaced apart.

8. The sliding focus drive apparatus according to any one of claims 1 to 6, wherein the drive magnet is disposed on the mounting base, the sliding focus drive apparatus further comprises a magnetic component, and the magnetic component is disposed on the bracket and is capable of being magnetically attracted to the drive magnet, so that the mounting base is attached to the guiding part of the bracket.

9. The sliding focus drive apparatus according to any one of claims 1 to 7, wherein the sliding focus drive apparatus further comprises a position sensor and a drive controller; and
the position sensor is mounted on the mounting base, to detect a real-time position of the mounting base and feed back the real-time position to the drive controller, the drive controller is electrically connected to the position sensor and the drive assembly, to receive the real-time position fed back by the position sensor and control, based on the real-time position, the drive assembly to drive the mounting base to slide.

10. The sliding focus drive apparatus according to any one of claims 1 to 9, wherein the sliding focus drive apparatus further comprises an image stabilization assembly, and the image stabilization assembly comprises a first coil, a second coil, a first magnet, and a second magnet;
the first coil is disposed corresponding to the first magnet and is capable of moving relative to the first magnet during power-on, to drive the mounting base to move in a first direction, and the second coil is disposed corresponding to the second magnet and is capable of moving relative to the second magnet during power-on, to drive the mounting base to move in a second direction; and
the first direction, the second direction, and the direction of the optical axis of the lens are perpendicular to each other.

11. The sliding focus drive apparatus according to claim 10, wherein the first coil and the second coil are located on a same plane, and the plane on which the first coil and the second coil are located is perpendicular to the optical axis of the lens.

12. The sliding focus drive apparatus according to claim 10, wherein both a plane on which the first coil is located and a plane on which the second coil is located are parallel to the optical axis of the lens.

13. A lens module, comprising the sliding focus drive apparatus according to any one of claims 1 to 12 and a lens, wherein the lens is mounted on the mounting base of the sliding focus drive apparatus.

14. An electronic device, comprising the lens module according to claim 13.
